(19) Europäisches Patentamt
European Patent Office
Office européen des brevets

(11) **EP 2 096 133 A1**

(12) **EUROPEAN PATENT APPLICATION**
published in accordance with Art. 153(4) EPC

(43) Date of publication:
**02.09.2009 Bulletin 2009/36**

(51) Int Cl.:
**C08G 69/26** (2006.01)

(21) Application number: **07859842.2**

(22) Date of filing: **11.12.2007**

(86) International application number:
**PCT/JP2007/074185**

(87) International publication number:
**WO 2008/072754 (19.06.2008 Gazette 2008/25)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.12.2006 JP 2006333074**

(71) Applicant: **Ube Industries, Ltd.**
**Ube-shi,**
**Yamaguchi-ken 755-8633 (JP)**

(72) Inventors:
• **OKUSHITA, Hiroshi**
**Ube-shi**
**Yamaguchi 755-8633 (JP)**

• **KURACHI, Kouichiro**
**Ube-shi**
**Yamaguchi 755-8633 (JP)**
• **SHIMOKAWA, Masato**
**Ube-shi**
**Yamaguchi 755-8633 (JP)**
• **TANAKA, Shouichi**
**Ube-shi**
**Yamaguchi 755-8633 (JP)**

(74) Representative: **Hoeger, Stellrecht & Partner**
**Patentanwälte**
**Uhlandstrasse 14c**
**70182 Stuttgart (DE)**

(54) **POLYAMIDE RESIN**

(57) There is provided a polyamide resin that can achieve a sufficiently high molecular weight compared to conventional polyamide 92, has a broad moldable temperature range or width estimated from a difference between melting point and thermal decomposition temperature, exhibits excellent melt moldability and has excellent chemical resistance and hydrolysis resistance compared to conventional aliphatic polyamide resins without impairing low water absorption property of an aliphatic linear polyoxamide resin. A polyamide resin in which the dicarboxylic acid component is oxalic acid and the diamine component is a diamine component composed of 1,9-nonanediamine and 2-methyl-1,8-octanediamine, with the molar ratio between 1,9-nonanediamine and 2-methyl-1,8-octanediamine being from 6:94 to 99:1.

**Description**

CROSS-REFERENCE TO RELATED APPLICATIONS

This application is based upon and claims the benefit of priority from Japanese Patent Application No. 2006-333074, filed on December 11, 2006, the contents of which are incorporated herein by reference.

TECHNICAL FIELD

The present invention relates to a novel polyamide resin. More specifically, the present invention relates to a polyamide resin in which the dicarboxylic acid component is oxalic acid and which is assured of a wide moldable temperature range and excellent molding processability and is excellent also in low water absorption, chemical resistance, hydrolysis resistance and the like.

BACKGROUND ART

A crystalline polyamide represented by nylon 6, nylon 66 and the like is widely used as a fiber for clothing materials and industrial supplies or as a general-purpose engineering plastic because of its excellent properties and easiness of melt molding, but, there are problems, such as a change in physical properties due to water absorption or deterioration in acid, high-temperature alcohol or hot water. Demands for a polyamide excellent in dimensional stability and chemical resistance are increasing.

A polyamide resin using oxalic acid as the dicarboxylic acid component is called a polyoxamide resin and is known to have a high melting point and low water absorption compared to other polyamide resins having the same amino group concentration (Japanese Unexamined Patent Publication (Kokai) No. 2006-57033), and utilization of a polyoxamide resin is expected in the field where use of a conventional polyamide laden with a problem of change in physical properties due to water absorption is difficult.

Polyoxamide resins using various aliphatic linear diamines as the diamine component have been heretofore proposed, but a polyoxamide resin using 1,6-hexanediamine as the diamine component is not usable because its melting point (about 320°C) is higher than the thermal decomposition temperature (temperature of 1% weight decrease in nitrogen: about 310°C) (S.W. Shalaby, J. Polym. Sci., 11, 1 (1973)) and this makes the melt polymerization or melt molding difficult.

As for a polyoxamide resin in which the diamine component is 1,9-nonanediamine (hereinafter, this resin is simply referred to as "PA92"), the production process when using diethyl oxalate as the oxalic acid source as well as the crystal structure are disclosed by L. Franco et al. (L. Franco et al., Macromolecules, 31, 3912 (1988)). PA92 obtained here is a polymer having an intrinsic viscosity of 0.97 dL/g and a melting point of 246°C, but only a polymer having a low molecular weight that does not allow to mold a strong shaped body is obtained. Furthermore, in Japanese Unexamined Patent Publication (Kohyo) No. 5-506466, it is indicated that in the case of using dibutyl oxalate as the dicarboxylic acid ester, PA92 having an intrinsic viscosity of 0.99 dL/g and a molting point of 248°C is produced (Japanese Unexamined Patent Publication (Kohyo) No. 5-506466). Also in this case, there is a problem that the polymer obtained is only a polymer having a low molecular weight that does not allow to mold a strong shaped body.

In the related arts, specific disclosure of a polyoxamide resin using two kinds of diamines, that is, 1,9-nonanediamine and 2-methyl-1,8-octanediamine, as the diamine component in a specific ratio does not exist.

DISCLOSURE OF THE INVENTION

The problem to be solved by the present invention is to provide a polyamide resin that can achieve a sufficiently high molecular weight compared to conventional PA92, has a broad moldable temperature width estimated from a difference between melting point and thermal decomposition temperature, exhibits excellent melt moldability and is assured of excellent performance such as chemical resistance and hydrolysis resistance compared to conventional aliphatic polyamide resins without impairing low water absorption characteristic of an aliphatic linear polyoxamide resin.

As a result of intensive studies to solve the above-described problem, the present inventors have found that when an oxalic acid diester is used as the oxalic acid source and a mixture composed of 1,9-nonanediamine and 2-methyl-1,8-octanediamine, with the molar ratio between 1,9-nonanediamine and 2-methyl-1,8-octanediamine being from 6:94 to 99:1, is used as the diamine component, a polyamide resin having a high molecular weight, exhibiting excellent melt moldability due to a large difference between the melting point and thermal decomposition temperature, and being excellent in chemical resistance and hydrolysis resistance compared to conventional polyamides without impairing low water absorption property of a linear polyoxamide resin, can be obtained. The present invention has been accomplished based on this finding.

The polyamide resin of the present invention can achieve high molecular weight by melt polymerization, has a wide moldable temperature range or width of 90°C or more, exhibits excellent melt moldability, is excellent also in low water absorption, chemical resistance and hydrolysis resistance and thus can be used over a wide range as an industrial component, an industrial material or a molding material for household products.

BEST MODE FOR CARRYING OUT THE INVENTION

(1) Constituent Components of Polyamide Resin

The polyamide of the present invention is a polyamide resin in which the dicarboxylic acid component is oxalic acid and the diamine component is a diamine mixture composed of 1,9-nonanediamine and 2-methyl-1,8-octanediamine, with the molar ratio between 1,9-nonanediamine and 2-methyl-1,8-octanediamine being from 6:94 to 99:1.

As for the oxalic acid source used in the production of the polyamide of the present invention, an oxalic acid diester is used, and this is not particularly limited as long as it has reactivity with an amino group. Examples thereof include an oxalic acid diester of an aliphatic monohydric alcohol, such as dimethyl oxalate, diethyl oxalate, di-n-(or i-) propyl oxalate and di-n-(or i-, or tert-)butyl oxalate, an oxalic acid diester of an alicyclic alcohol, such as dicyclohexyl oxalate, and an oxalic acid diester of an aromatic alcohol, such as diphenyl oxalate.

Among these oxalic acid diesters, an oxalic acid diester of an aliphatic monohydric alcohol having a carbon number exceeding 3, an oxalic acid diester of an alicyclic alcohol, and an oxalic acid diester of an aromatic alcohol are preferred, and dibutyl oxalate and diphenyl oxalate are more preferred.

As for the diamine component, a mixture of 1,9-nonanediamine and 2-methyl-1,8-octanediamine is used. The molar ratio between the 1,9-nonanediamine component and the 2-methyl-1,8-octanediamine component is from 6:94 to 99:1 mol%, preferably from 6:94 to 90:10 mol%, more preferably from 60:40 to 95:5 mol%, still more preferably from 70:30 to 90:10 mol%. By copolymerizing 1,9-nonanediamine and 2-methyl-1,8-octanediamine in the above-described specific amounts, a polyamide having a wide moldable temperature range or width and excellent melt moldability and being excellent also in low water absorption, chemical resistance, hydrolysis resistance and the like can be obtained.

(2) Production of Polyamide Resin

The polyamide resin of the present invention can be produced using an arbitrary method known as a method for producing a polyamide. According to studies by the present inventors, the polyamide resin can be obtained by polycondensation reacting a diamine and an oxalic acid diester in batch system or continuous system. More specifically, as illustrated in the following operations, the production is preferably performed through, in order, (i) a pre-polycondensation step and (ii) a post-polycondensation step. (i) Pre-Polycondensation Step:

After replacing the inside of a reactor with nitrogen, a diamine (diamine component) and an oxalic acid diester (oxalic acid source) are mixed. Mixing may be performed using a solvent in which both a diamine and an oxalic acid diester are soluble. The solvent in which both the diamine component and the oxalic acid source are soluble is not particularly limited, but toluene, xylene, trichlorobenzene, phenol, trifluoroethanol or the like may be used and, toluene is preferably used. For example, a toluene solution having dissolved therein a diamine is heated at 50°C, and an oxalic acid diester is added thereto. At this time, the charge ratio of an oxalic acid diester to the above-described diamine is, in terms of oxalic acid diester/the above diamines, from 0.8 to 1.5 (by mol), preferably from 0.91 to 1.1 (by mol), more preferably from 0.99 to 1.01 (by mol).

The temperature inside of the reactor into which these components are charged is raised under atmospheric pressure with stirring and/or nitrogen bubbling. The reaction temperature is preferably controlled such that the final peak temperature falls in the range from 80 to 150°C, more preferably from 100 to 140°C. The reaction time at the final peak temperature is from 3 to 6 hours. (ii) Post-Polycondensation Step:

Furthermore, for achieving a high molecular weight, the polymerization product produced in the pre-polycondensation step is subjected to gradual temperature rise in the reactor under atmospheric pressure. In this process, the temperature is raised to reach the final peak temperature in the pre-polycondensation step, that is, from the range of 80 to 150°C to finally reach the temperature range of 220 to 300°C, preferably 230 to 280°C, more preferably 240 to 270°C. The reaction is preferably performed by maintaining the temperature for 1 to 8 hours, preferably from 2 to 6 hours, including the temperature rise time. In the post-polymerization step, polymerization under reduced pressure may also be performed, if desired. In the case of performing polymerization under reduced pressure, the final peak pressure is preferably from less than 0.1 MPa to 13.3 Pa.

(3) Characteristics and Physical Properties of Polyamide Resin

The molecular weight of the polyamide resin obtained in the present invention is not particularly limited, but the relative viscosity ηr measured at 25°C by using a 96% concentrated sulfuric acid solution having a polyamide resin concentration of 1.0 g/dl is from 1.8 to 6.0, preferably from 2.0 to 5.5, more preferably from 2.5 to 4.5. If ηr is less than 1.8, a brittle molded product results and the physical properties decrease, whereas if ηr exceeds 6.0, the melt viscosity becomes high and the molding processability is worsened.

In the polyamide resin of the present invention, oxalic acid is used as the carboxylic acid component and 1,9-nonanediamine and 2-methyl-1,8-octanediamine are copolymerized as the diamine component, whereby compared to a polyamide composed of oxalic acid and 1,9-nonanediamine, the relative viscosity can be raised, that is, the molecular weight can be increased. Also, the moldable temperature range represented by a difference (Td-Tm) between the temperature of 1% weight decrease (hereinafter simply referred to as "Td") indicative of substantial thermal decomposition and the melting point (hereinafter simply referred to as "Tm") is broadened compared with a polyamide composed of oxalic acid and 1,9-nonanediamine and may be preferably 60°C or more, more preferably 70°C or more, and even 90°C or more. The polyamide resin of the present invention has Td of preferably 300°C or more, more preferably 320°C or more, and thus has high heat resistance.

(4) Components Blended in Polyamide Resin

In the polyamide resin of the present invention, other dicarboxylic acid components may be mixed within the range not impairing the effects of the present invention. As for the dicarboxylic acid component other than oxalic acid, an aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid and suberic acid, an alicyclic dicarboxylic acid such as 1,3-cyclopentanedicarboxylic acid and 1,4-cyclohexanedicarboxylic acid, and an aromatic dicarboxylic acid such as terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, dibenzoic acid, 4,4'-oxydibenzoic acid, diphenylmethane-4,4'-dicarboxylic acid, diphenylsulfone-4,4'-dicarboxylic acid and 4,4'-biphenyldicarboxylic acid may be added individually or as an arbitrary mixture thereof during the polycondensation reaction. Furthermore, a polyvalent carboxylic acid such as trimellitic acid, trimesic acid and pyromellitic acid may be added within the range allowing for melt molding.

In the polyamide resin of the present invention, other diamine components may be mixed within the range not impairing the effects of the present invention. As for the diamine component other than 1,9-nonanediamine and 2-methyl-1,8-octanediamine, an aliphatic diamine such as ethylenediamine, propylenediamine, 1,4-butanediamine, 1,6-hexanediamine, 1,8-octanediamine, 1,10-decanediamine, 1,12-dodecanediamine, 3-methyl-1,5-pentanediamine, 2,2,4-trimethyl-1,6-hexanediamine, 2,4,4-trimethyl-1,6-hexanediamine and 5-methyl-1,9-nonanediamine, an alicyclic diamine such as cyclohexanediamine, methylcyclohexanediamine and isophoronediamine, and an aromatic diamine such as p-phenylenediamine, m-phenylenediamine, p-xylenediamine, m-xylenediamine, 4,4'-diaminodiphenylmethane, 4,4'-diaminodiphenylsulfone and 4,4'-diaminodiphenyl ether may be added individually or as an arbitrary mixture thereof during the polycondensation reaction.

Also, in the present invention, other polyoxamides or polyamides such as aromatic polyamide, aliphatic polyamide and alicyclic polyamide may be mixed within the range not impairing the effects of the present invention. Furthermore, a thermoplastic polymer, elastomer or filler other than polyamide, a reinforcing fiber and various additives may be blended similarly.

In the polyamide resin of the present invention, a stabilizer such as copper compound, a colorant, an ultraviolet absorber, a photostabilizing agent, an antioxidant, an antistatic agent, a flame retardant, a crystallization accelerator, a glass fiber, a plasticizer, a lubricant and the like may be added, if desired, during or after the polycondensation reaction.

(5) Molding of Polyamide Resin

Regarding the method for molding the polyamide resin obtained in the present invention, all known molding processing methods applicable to polyamide, such as injection, extrusion, blow, press, roll, foam, vacuum/pressure and stretch, can be employed, and the polyamide resin can be formed into a film, a sheet, a molded article, a fiber or the like by such a molding method.

(6) Usage of Polyamide Molded Product

The molded product of the polyamide obtained in the present invention can be used as various molded articles for which a polyamide molded product has been conventionally used, such as sheet, film, pipe, tube, monofilament, fiber and container, in a wide range of applications such as automobile members, computers and computer-related devices, optical device members, electric/electronic devices, information/telecommunication equipment, precision equipment, civil engineering/building construction products, medical supplies and household products.

EXAMPLES

[Measurements of Physical Properties, Molding, Evaluation Methods]

The present invention is described in greater detail below by referring to Examples, but the present invention is not limited thereto. Incidentally, in the Examples, the measurements of relative viscosity, melting point, crystallization temperature, 1% weight decrease temperature, melt viscosity and saturated water absorption percentage, the evaluations of chemical resistance and hydrolysis resistance, the film molding, and the measurements of tensile strength, tensile elongation, flexural strength, flexural modulus, impact strength and thermal deformation temperature were performed by the following methods.

(1) Relative Viscosity ($\eta r$)

$\eta r$ was measured at 25°C by an Ostwald's viscometer using a 96% sulfuric acid solution of polyamide (concentration: 1.0 g/dl).

(2) Melting Point (Tm) and Crystallization Temperature (Tc)

Tm and Tc were measured using PYRIS Diamond DSC manufactured by Perkin-Elmer in a nitrogen atmosphere. The temperature was raised from 30°C to 270°C at a rate of 10°C/min (referred to as a temperature-rise first run), kept at 270°C for 3 minutes, then lowered to -100°C at a rate of 10°C/min (referred to as a temperature-drop first run) and thereafter raised to 270°C at a rate of 10°C/min (referred to as a temperature-rise second run). From the obtained DSC chart, the exothermic peak temperature in the temperature-drop first run was read and designated as Tc, and the endothermic peak temperature in the temperature-rise second run was read and designated as Tm.

(3) 1% Weight Decrease Temperature (Td)

Td was measured by thermogravimetric analysis (TGA) by using THERMOGRAVIMETRIC ANALYZER TGA-50 manufactured by Shimadzu Corporation. By raising the temperature from room temperature to 500°C at a temperature rise rate of 10°C/min in a nitrogen stream flowing at 20 ml/min, Td was measured.

(4) Melt Viscosity

The melt viscosity was measured in nitrogen under the conditions of 260°C and a shear rate of 0.1 s$^{-1}$ by using a melt viscoelastometer, ARES, manufactured by TA Instruments, Japan.

(5) Film Molding

Film molding was performed using a vacuum press, TMB-10, manufactured by Toho Machinery Co., Ltd. The resin was melted under heating at 260°C for 5 minutes in a reduced-pressure atmosphere of 500 to 700 Pa, then subjected to film molding by using the press under 5 MPa for 1 minute and after returning the reduced-pressure atmosphere to atmospheric pressure, cooled and crystallized at room temperature under 5 MPa for 1 minute to obtain a film.

(6) Saturated Water Absorption Percentage

A film (dimension: 20 mm × 10 mm, thickness: 0.25 mm, weight: about 0.05 g) obtained by molding the polyamide resin under the conditions of (5) was dipped in ion-exchanged water at 23°C, and the weight of the film was measured by pulling the film out at intervals of a predetermined time. Having judged that absorption of water into the polyamide resin film was saturated when the film weight showed an increase of 0.2% three times in a row, the saturated water absorption (%) was calculated according to the formula (1) from the weight (X g) of the film before dipping in water and the weight (Y g) of the film when reached saturation.

$$\text{Saturated water absorption (\%)} = \frac{Y-X}{X} \times 100 \quad (1)$$

(7) Chemical Resistance

The hot-pressed film of polyamide obtained according to the present invention was dipped in chemicals enumerated below for 7 days, and the weight residual ratio (%) and appearance change of the film were observed. The test was performed on a sample dipped at 23°C in the case of each solution of concentrated hydrochloric acid, 64% sulfuric acid, an aqueous 30% sodium hydroxide solution and an aqueous 5% potassium permanganate solution and on a sample dipped at 50°C in the case of benzyl alcohol.

(8) Hydrolysis Resistance

The hot-pressed film of polyamide obtained according to the present invention was placed in an autoclave and treated at 121°C for 60 minutes in each of water, 0.5 mol/l sulfuric acid and an aqueous 1 mol/l sodium hydroxide solution, and the weight residual ratio (%) and appearance change after the treatment were examined.

(9) Mechanical Properties

The measurements of [1] to [4] below were performed using a test specimen formed by injection molding at a resin temperature of 260°C and a mold temperature of 80°C.

[1] Tensile Test (Tensile Strength at Yield Point and Tensile Breaking Elongation)

These were measured in accordance with ASTM D638 by using a test specimen of Type I described in ASTM D638.

[2] Bending Test (Flexural Strength and Flexural Modulus)

These were measured at 23°C in accordance with ASTM D790 by using a test specimen having a specimen dimension of 129 mm $\times$ 12.7 mm $\times$ 3.2 mm.

[3] Impact Strength (Izod with notch)

This was measured at 23°C in accordance with ASTM D256 by using a test specimen having a specimen dimension of 63.5 mm $\times$ 12.7 mm $\times$ 3.2 mm.

[4] Deflection Temperature Under Load

This was measured under a load of 1.82 MPa in accordance with ASTM D648 by using a test specimen having a specimen dimension of 129 mm $\times$ 12.7 mm $\times$ 3.2 mm.

[Example 1]

(i) Pre-Polycondensation Step

The inside of a separable flask having an inner volume of 1 L and being equipped with a stirrer, a reflux condenser, a nitrogen inlet tube and a raw material charging port was replaced by a nitrogen gas with a purity of 99.9999%, and 500 ml of dehydrated toluene, 68.3091 g (0.4316 mol) of 1,9-nonanediamine and 12.0545 g (0.0762 mol) of 2-methyl-1,8-octanediamine were charged thereinto. The separable flask was placed in an oil bath and after raising the temperature to 50°C, 102.1956 g (0.5053 mol) of dibutyl oxalate was charged. Subsequently, the temperature of the oil bath was raised to 130°C, and the reaction was allowed to proceed under reflux for 5 hours. Incidentally, all operations from the charging of raw materials until the completion of reaction were performed in a nitrogen stream flowing at 50 ml/min.

(ii) Post-Polycondensation Step

The pre-polymerization product obtained by the operations above was charged into a glass-made reaction tube having a diameter of about 35 mm and being equipped with a stirrer, an air-cooling tube and a nitrogen inlet tube, and an operation of keeping the inside of the reaction tube under reduced pressure of 13.3 Pa or less and then introducing a nitrogen gas to atmospheric pressure was repeated five times. Thereafter, the reaction tube was transferred to a salt bath kept at 210°C in a nitrogen stream flowing at 50 ml/min, and temperature rise was immediately started. After raising the temperature of the salt bath to 260°C over 1 hour, the pressure in the vessel was reduced to about 66.5 Pa, and the reaction was allowed to further proceed for 2 hours. Subsequently, a nitrogen gas was introduced to atmospheric pressure, and the reaction tube was taken out from the salt bath and cooled to room temperature in a nitrogen stream flowing at 50 ml/min to obtain a polyamide resin. The obtained polyamide was a white tough polymer.

[Example 2]

A polyamide was obtained by performing the reaction in the same manner as in Example 1 except that in the pre-polymerization step, a 500 ml-volume separable flask was used and 200 ml of dehydrated toluene, 18.9835 g (0.1199 mol) of 1,9-nonanediamine, 4.7459 g (0.0300 mol) of 2-methyl-1,8-octanediamine and 30.1957 g (0.1493 mol) of dibutyl oxalate were charged. The obtained polyamide was a white tough polymer. The film formed from this polyamide was a colorless transparent tough film.

[Example 3]

(i) Pre-Polycondensation Step

The inside of a separable flask having an inner volume of 5 L and being equipped with a stirrer, an air-cooling tube, a nitrogen inlet tube and a raw material charging port was replaced by a nitrogen gas with a purity of 99.9999%, and 1,211 g (5.9871 mol) of dibutyl oxalate was charged. While keeping this vessel at 20°C, 807.6 g (5.102 mol) of 1,9-nonanediamine and 142.5 g (0.9004 mol) of 2-methyl-1,8-octanediamine were added with stirring, and the polycondensation reaction was allowed to proceed. Incidentally, all operations from the charging of raw materials until the completion of reaction were performed in a nitrogen stream flowing at 200 ml/min.

(ii) Post-Polycondensation Step

The pre-polymerization product obtained by the operations above was charged into a 5 L-volume pressure vessel equipped with a stirrer, a thermometer, a torque meter, a manometer, a nitrogen gas inlet and a polymer outlet, and an operation of keeping the inside of the pressure vessel under pressure of 3.0 MPa or more and then releasing the nitrogen gas to atmospheric pressure was repeated five times. Thereafter, the temperature in the system was raised in a nitrogen stream under atmospheric pressure, and the internal temperature was allowed to reach 120°C over 1.5 hours. At this time, distillation of butanol was confirmed. The temperature was raised to 260°C over 5 hours while distilling out butanol, and the reaction was allowed to proceed for 2 hours. Subsequently, the temperature in the system was lowered to 250°C and after standing still for 25 minutes and stopping stirring, the inside of the system was pressurized with nitrogen to 3.5 MPa. The resulting polymerization product was extracted in the form of a string from the bottom of the pressure vessel, the string-like polymerization product was immediately cooled with water, and the water-cooled string-like polymerization product was pelletized by a pelletizer. The obtained polymerization product was a white tough polymer. This polyamide was injection-molded at a cylinder temperature of 260°C, a mold temperature of 80°C and an injection peak pressure of 140 MPa, and the molded article obtained was measured for various physical values. The results obtained are shown in Table 5 below.

[Comparative Example 1]

A polyamide was obtained by performing the reaction in the same manner as in Example 1, except that in the pre-polymerization step, a 300 ml-volume separable flask was used and 100 ml of dehydrated toluene, 21.2125 g (0.1340 mol) of 1,9-nonanediamine and 27.0852 g (0.1339 mol) of dibutyl oxalate were charged and in the post-polymerization step, the polymerization was performed under atmospheric pressure. The obtained polyamide was a yellow polymer.

The diamine composition, $\eta r$, melting point (Tm), crystallization temperature (Tc), 1% weight decrease temperature (Td), Td-Tm and melt viscosity of each of the polyamides obtained in Examples 1, 2 and 3 and Comparative Example 1 are shown in Table 1. The Td-Tm of the polyamides obtained in Examples 1, 2 and 3 is larger than that of the polyamide obtained in Comparative Example 1, revealing a wide molding processing temperature range. Also, the Td of the polyamides obtained in Examples 1, 2 and 3 is higher than Td of the polyamide in Comparative Example 1, revealing excellent heat resistance.

Table 1

| | Example 1 | Example 2 | Example 3 | Comparative Example 1 |
|---|---|---|---|---|
| Diamine composition (2-methyl-1,8-octanediamine/1,9-nonanediamine) | 15/85 | 20/80 | 15/85 | 0/100 |
| Relative viscosity $\eta r$ [*1] | 3.18 | 3.08 | 3.30 | 2.80 |
| Melting point Tm (°C) [*2] | 243 | 235 | 243 | 251 |
| Crystallization temperature Tc (°C) [*2] | 212 | 203 | 212 | 227 |
| 1% Weight decrease temperature Td (°C) [*3] | 338 | 354 | 340 | 296 |
| Td-Tm (°C) | 95 | 119 | 97 | 45 |
| Melt viscosity (Pa·s) [*4] | 409 | - | 506 | 774 |

*1 Solvent: 96% sulfuric acid solution, concentration: 1.0 g/dl, temperature: 25°C.
*2 Measured by DSC, nitrogen atmosphere, temperature rise rate: 10°C/min.
*3: Nitrogen stream (20 ml/min) atmosphere, temperature rise rate: 10°C/min.
*4: Temperature: 260°C, shear rate: 0.1 sec$^{-1}$.

[Comparative Example 2]

A film was formed using nylon 6 (UBE Nylon 1015B, produced by Ube Industries, Ltd.) in place of the polyamide resin obtained according to the present invention. The obtained nylon 6 film was a colorless transparent tough film. The saturated water absorption percentage, chemical resistance and hydrolysis resistance of this film were evaluated. The results are shown in Tables 2, 3 and 4, respectively.

[Comparative Example 3]

A film was formed using nylon 12 (UBESTA 3014U, produced by Ube Industries, Ltd.) in place of the polyamide resin obtained according to the present invention. The obtained nylon 12 film was a colorless transparent tough film. The saturated water absorption percentage, chemical resistance and hydrolysis resistance of this film were evaluated. The results are shown in Tables 2, 3 and 4, respectively.
As seen from Tables 2, 3 and 4, the polyamide resin of the present invention exhibits low water absorption compared to nylon 6 or 12 and is excellent in the chemical resistance and hydrolysis resistance.
Mechanical properties of the injection molded product of the polyamide resin obtained in Example 3 are shown in Table 5.

Table 2: Saturated Water Absorption Percentage

| | Example 2 | Comparative Example 2 | Comparative Example 3 |
|---|---|---|---|
| Saturated water absorption (%) | 1.3 | 10.6 | 1.6 |

Table 3: Chemical Resistance

| Chemicals | Weight Residual Ratio (%), Appearance Change | | |
|---|---|---|---|
| | Example 2 | Comparative Example 2 | Comparative Example 3 |
| Concentrated hydrochloric acid | 101 | unrecoverable | 128 surface whitening |
| 64% Sulfuric acid | 100 | unrecoverable | 153 whitening |
| 30% NaOH | 100 | 103 | 101 |
| 5% $K_2MnO_4$ | 100 | unrecoverable | 101 |
| Benzyl alcohol (50°C) | 103 | 133 deformation | 122 deformation |

Table 4: Hydrolysis Resistance

| | Weight Residual Ratio (%), Appearance Change | |
|---|---|---|
| | Example 2 | Comparative Example 2 |
| Water (pH 7) | 100 | 96 |
| 0.5 mol/l Sulfuric acid (pH 1) | 100 | 96 (degradation) |
| 1 mol/l NaOH (pH 14) | 100 | 96 |
| Measurement conditions: 121°C, 60 min. | | |

Table 5: Mechanical Properties

| Mechanical Properties | Example 3 |
|---|---|
| Tensile Strength at Yield Point (MPa) | 69 |
| Tensile Breaking Elongation (%) | 93 |
| Flexural Strength (MPa) | 100 |
| Flexural Modulus (GPa) | 2.3 |
| Impact Strength (Izod with notch) (J/m) | 44 |
| Deflection Temperature Under Load (1.82 MPa) (°C) | 118 |

INDUSTRIAL APPLICABILITY

The polyamide of the present invention is a polyoxamide resin excellent in low water absorption, chemical resistance, hydrolysis resistance and the like and assured of excellent melt molding processability and can be suitably used as an industrial component, an industrial material or a molding material for household products, for example, can be used as various injection molded articles such as a sheet, film, pipe, tube, monofilament and fiber, in a wide range of applications such as automobile parts, optical device parts, electric/electronic devices, information/telecommunication equipment, precision equipment, civil engineering/building construction products, medical supplies and household products.

**Claims**

1. A polyamide resin in which the dicarboxylic acid component is oxalic acid and the diamine component is a diamine component comprising 1,9-nonanediamine and 2-methyl-1,8-octanediamine, with the molar ratio between 1,9-nonanediamine and 2-methyl-1,8-octanediamine being from 6:94 to 99:1.

2. The polyamide resin as claimed in claim 1, wherein the relative viscosity ($\eta$r) measured at 25°C by using a polyamide resin solution containing 96% sulfuric acid as the solvent and having a concentration of 1.0 g/dl is from 1.8 to 6.0.

3. The polyamide resin as claimed in claim 1, wherein the relative viscosity ($\eta$r) measured at 25°C by using a polyamide resin solution containing 96% sulfuric acid as the solvent and having a concentration of 1.0 g/dl is from 2.5 to 4.5.

4. The polyamide resin as claimed in claim 1, wherein the temperature difference between the 1% weight decrease temperature in a thermogravimetric analysis measured in a nitrogen atmosphere at a temperature rise rate of 10°C/min and the melting point measured in a nitrogen atmosphere by a differential scanning calorimetry at a temperature rise rate of 10°C/min is 60°C or more.

5. The polyamide resin as claimed in claim 1, wherein the temperature difference between the 1% weight decrease temperature in a thermogravimetric analysis measured in a nitrogen atmosphere at a temperature rise rate of 10°C/min and the melting point measured in a nitrogen atmosphere by a differential scanning calorimetry at a temperature rise rate of 10°C/min is 90°C or more.

6. The polyamide resin as claimed in claim 1, wherein the molar ratio between 1,9-nonanediamine and 2-methyl-1,8-octanediamine constituting the diamine component is from 6:94 to 90:10.

7. The polyamide resin as claimed in claim 6, wherein the molar ratio between 1,9-nonanediamine and 2-methyl-1,8-octanediamine constituting the diamine component is from 60:40 to 90:10.

8. The polyamide resin as claimed in claim 6, wherein the molar ratio between 1,9-nonanediamine and 2-methyl-1,8-octanediamine constituting the diamine component is from 70:30 to 90:10.

9. The polyamide resin as claimed in claim 1, which further contains a dicarboxylic acid other than oxalic acid and/or a diamine other than 1,9-nonanediamine and 2-methyl-1,8-octanediamine.

10. The polyamide resin as claimed in claim 1, which further contains additives.

11. A polyamide resin molded article comprising the polyamide resin claimed in any one of claims 1 to 10.

12. The polyamide resin molded article as claimed in claim 11, which has any one shape selected from a sheet, a film, a pipe, a tube, a monofilament, a fiber and a container.

13. The polyamide resin molded article as claimed in claim 11, which is any one member selected from automobile members, computers and computer-related devices, optical device members, electric/electronic devices, information/telecommunication equipment, precision equipment, civil engineering/building construction products, medical supplies and household products.

## INTERNATIONAL SEARCH REPORT

| International application No. |
| --- |
| PCT/JP2007/074185 |

### A. CLASSIFICATION OF SUBJECT MATTER
*C08G69/26*(2006.01)i

According to International Patent Classification (IPC) or to both national classification and IPC

### B. FIELDS SEARCHED

Minimum documentation searched (classification system followed by classification symbols)
C08G69/00-69/50

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
CAplus(STN), REGISTRY(STN)

### C. DOCUMENTS CONSIDERED TO BE RELEVANT

| Category* | Citation of document, with indication, where appropriate, of the relevant passages | Relevant to claim No. |
| --- | --- | --- |
| A | JP 5-506466 A (Exxon Chemical Patents Inc.), 22 September, 1993 (22.09.93), Claims 1, 8; page 6, example 2; page 7, table I & WO 1991/013113 A1 & US 5093466 A & EP 515553 A1 & US 5223603 A | 1-13 |
| A | JP 47-44996 B1 (Imperial Chemical Industries Ltd.), 13 November, 1972 (13.11.72), Claims; column 1, line 26 to column 2, line 2; column 3, line 27 to column 4, line 2; column 9, example 10 & US 3634362 A & BE 745776 A & NL 7001841 A & DE 2007750 A & FR 2035623 A & GB 1252073 A & CA 893186 A & SU 334716 A | 1-13 |

☒ Further documents are listed in the continuation of Box C.   ☐ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| 20 February, 2008 (20.02.08) | 04 March, 2008 (04.03.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/074185

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-228689 A (Kuraray Co., Ltd.),<br>29 August, 1995 (29.08.95),<br>Claims; Par. Nos. [0007], [0013], [0038],<br>[0042]; table 3<br>& EP 659799 A2          & CA 2137477 A<br>& JP 7-228690 A         & TW 299338 A<br>& CN 1106842 A          & US 5670608 A<br>& SG 55041 A1           & CN 1220289 A | 1-13 |
| A | JP 2006-57033 A (Ube Industries, Ltd.),<br>02 March, 2006 (02.03.06),<br>Claims; Par. Nos. [0004], [0008], [0013],<br>[0040]<br>(Family: none) | 1-13 |
| A | JP 2000-86759 A (Kuraray Co., Ltd.),<br>28 March, 2000 (28.03.00),<br>Claims; Par. Nos. [0013], [0059]<br>(Family: none) | 1-13 |
| A | JP 2004-83817 A (Kuraray Co., Ltd.),<br>18 March, 2004 (18.03.04),<br>Claims; Par. Nos. [0005], [0053]<br>(Family: none) | 1-13 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006333074 A
- JP 2006057033 A
- JP 5506466 A

**Non-patent literature cited in the description**

- **S.W. Shalaby.** *J. Polym. Sci.,* 1973, vol. 11, 1
- **L. Franco et al.** *Macromolecules,* 1988, vol. 31, 3912